# EUROPÄISCHE PATENTSCHRIFT

(11) **EP 2 456 599 B1**
(45) Veröffentlichungstag und Bekanntmachung des Hinweises auf die Patenterteilung: **01.05.2013**
(21) Anmeldenummer: 10720273.1
(22) Anmeldetag: 11.05.2010
(51) Int. Cl.: B25J 15/00, B25J 15/04

(54) **GREIFER ZUR POSITIONIERUNG, BEFESTIGUNG, LAGEVERÄNDERUNG UND/ODER ZUM WECHSELN VON WERKZEUGEN AUF EINER MONTAGEFLÄCHE**
GRIPPER FOR POSITIONING, FASTENING, CHANGING THE POSITION OF, AND/OR EXCHANGING TOOLS ON A MOUNTING SURFACE
DISPOSITIF DE PRÉHENSION POUR LE POSITIONNEMENT, LA FIXATION, LA MODIFICATION DE POSITION ET/OU LE CHANGEMENT D'OUTILS SUR UNE SURFACE DE MONTAGE

(30) Priorität: 21.07.2009 DE 102009033989
(43) Veröffentlichungstag der Anmeldung: 30.05.2012
(73) Patentinhaber: ThyssenKrupp System Engineering GmbH, 74076 Heilbronn (DE)
(72) Erfinder: STEIN, Hans, 09337 Hohenstein-Ernstthal (DE)
(74) Vertreter: Kirchner, Sven
(86) Internationale Anmeldenummer: PCT/EP2010/002911
(87) Internationale Veröffentlichungsnummer: WO 2011/009506

(56) Entgegenhaltungen:
- DE-A1- 3 344 903
- DE-A1-102006 052 902
- DE-U1- 8 709 013
- US-A- 5 281 079

## Beschreibung

Die Erfindung betrifft einen Greifer zur Positionierung, Befestigung, Lageveränderung und/oder zum Wechseln von Werkzeugen auf einer Montagefläche.

Bei der DE 20 2006 005 855 U1 kommen mehrere wechselbare typspezifische Spanneinrichtungen zum Einsatz, die von einem Transportmittel aufgenommen und je nach Bedarf ausgetauscht werden können. Die Spanneinrichtung weist Schnittstellen zur Verbindung mit einem Handlingroboter und mit einer Aufnahmestelle des Transportmittels auf. Die Schnittstelle ist z. B. eine Andockstelle für die Roboterhand und deren Wechselwerkzeug. Die Schnittstellen wirken dabei zum Andocken und Positionieren der Spanneinrichtungen. Beispielsweise kann eine Schnittstelle an der Spanneinrichtung aus zwei oder mehr Zapfen bestehen, die in entsprechende, als Gegenöffnung ausgebildete Gegenschnittstellen an den Aufnahmestellen des Transportmittels eingreifen. Bei einem Typwechsel der Werkstücke/Bauteile kann der Handlingroboter die Spanneinrichtung eigenständig wechseln.

In DE 298 13 669 U1 wird eine flexible Arbeitsstation zum Bearbeiten, insbesondere zum Fügen und Geometrieschweißen von zwei oder mehr unterschiedlichen Typen von Bauteilen, bestehend aus mindestens einer Bauteilzuführung, mindestens einem flexiblen Bearbeitungsplatz mit mehreren beweglichen, typbezogenen Positioniervorrichtungen mit Spanneinrichtungen sowie ein oder mehreren Bearbeitungsvorrichtungen und mindestens einer Transportvorrichtung, die die Bauteile von der Bauteilzuführung zu den Positioniervorrichtungen transportiert, wobei die Transportvorrichtung mehrere wechselbare typbezogene Greifwerkzeuge aufweist, für die zum Werkzeugwechsel ein oder mehrere Greiferablage(n) auf den Bauteilen vorgesehen ist/sind, die sich auf der Positioniervorrichtung und/oder auf der Bauteilzuführung befinden. Es werden mehrere typbezogene Positioniervorrichtungen mit Spanneinrichtungen eingesetzt, wobei die Transportvorrichtung mehrere wechselbare typbezogene Greifwerkzeuge aufweist, für die zum Werkzeugwechsel ein oder mehrere Greiferablagen auf den Bauteilen vorgesehen sind. Die Greifwerkzeuge sind als Oberwerkzeug der Spanneinrichtung ausgebildet und mit einem Unterwerkzeug an der Positioniereinrichtung verbindbar. Diese Lösung ist relativ aufwendig, wobei es nachteilig ist, dass die Greifwerkzeuge nur typbezogen einsetzbar sind.

Aus DE 36 36 513 C2 ist eine Greifereinrichtung bekannt, die eine Antriebseinheit mit einem Getriebemotor aufweist, der über Gewindespindeln auswechselbare Greifbacken antreibt. Zur Durchführung von Schraubvorgängen insbesondere mittels eines Handhabungsgeräts ist die Greifereinrichtung an der Abtriebswelle von Schrauben anbringbar. Dabei ist die in der Schraubachse liegende Abtriebswelle des Getriebemotors mit einem Kegelradgetriebe verbunden, das über die Gewindespindeln Antriebsbacken in einer zur Schraubachse in etwa senkrechten Ebene verstellt. Zur Übertragung der Bewegung der Antriebsbacken auf die Greifbacken greifen die Antriebsbacken in Ausnehmungen in den Greifbacken ein.

Aus der US-A-5 281 079 ist ein Greifer zum Wechseln von Werkzeugen bekannt, der an einer Handhabungseinrichtung befestigbar ist und einer an einem Greiferm befestigten Schrauber besitzt, der eine Gewindespindel trägt.

Nachteil der vorgenannten Lösungen ist, dass bei Lageabweichungen der mittels der Greifer/Roboter auszuwechselnden Werkzeuges deren Greifen nicht zuverlässig gewährleistet werden kann.

Aufgabe der Erfindung ist es, einen Greifer zu entwickeln, der einen Einsatz für unterschiedliche Werkzeuge gestattet und ein zuverlässiges Aufnehmen und Befestigen der Werkzeuge auf einer Montagefläche gewährleistet.

Diese Aufgabe wird mit den Merkmalen des ersten Anspruches gelöst. Vorteilhafte Ausgestaltungen ergeben sich aus den Unteransprüchen.

Erfindungsgemäß wird ein Greifer vorgeschlagen, zur Positionierung, Befestigung, Lageveränderung und/oder zum Wechseln von Werkzeugen auf einer Montagefläche, der an einer Handhabungseinrichtung angeordnet ist und mindestens zwei an einem Greiferarm befestigte Schrauber zur Betätigung von jeweils einer Gewindespindel zur lösbaren Verbindung des Werkzeuges seinerseits mit dem Greiferarm und andererseits mit einer Montagefläche besitzt.

Das Befestigen eines vorzugsweise aus einem Magazin bereitgestellten Werkzeuges auf einer Montagefläche erfolgt erfindungsgemäß dadurch, dass das Werkzeug mit Hilfe eines vorzugsweise an einem Manipulator oder Roboterarm befestigten Greifers zur Befestigungsposition auf einer Montagefläche bewegt und das Werkzeug über eine erste Schnittstelle mit der Montagefläche verbunden wird, der Griefer über eine zweite Schnittstelle mit dem Werkzeug verbunden ist. Danach kann die zweite Schnittstelle gelöst und der Greifer ohne Werkzeug entfernt werden.

Die erste Schnittstelle ist insbesondere in Form einer am Greifer angeordneten und mittels eines ersten Schraubers betätigbaren ersten Gewindespindel ausgebildet, mit welcher das Werkzeug auf der Montagefläche lösbar befestigt werden kann. Die zweite Schnittstelle ist ebenfalls in Form einer am Greifer angeordneten und mittels eines zweiten Schraubers betätigbaren zweiten Gewindespindel ausgebildet. Mit der zweiten Gewindespindel ist das Werkzeug lösbar mit dem Greifer verbindbar. Die erste Gewindespindel ist dabei in eine in der Montagefläche ausgebildete erste Gewindebohrung derart einschraubbar, dass das Werkzeug beim oder durch das Einschrauben der ersten Gewindespindel auf der Montagefläche befestigbar ist.

Die zweite Gewindespindel ist in eine zweite Gewindebohrung des Werkzeuges einschraubbar und das Werkzeug ist beim oder durch das Einschrauben der zweiten Gewindespindel mit einer zweiten greiferseitigen Anlagefläche gegen eine Anlagefläche des Greifers spannbar oder anlegbar. Der Greifer besitzt dazu vorteilhafter Weise ein Andockelement, an welchem die Anlagefläche des Greifers ausgebildet ist, wobei die zweite Gewindespindel durch eine Bohrung oder Öffnung durch das Andockelement geführt wird.

Die erste Gewindespindel wird am Greifer von wenigstens einem Lagerungselement aufgenommen, das vorteilhafter Weise zum Ausgleich von Lageabweichungen in einer zur Längsachse der Gewindespindel rechtwinkligen oder im Wesentlichen rechtwinkligen Ebene bewegbar und/oder schwimmend gelagert ist. Diese bewegbare, verschiebbare und/oder schwimmende Lagerung ist vorteilhafter Weise mechanisch verriegelbar und entriegelbar und mit Anschlägen versehen, die insbesondere federnd ausgebildet sind, wobei die Federn der federnd gelagerten Anschläge des Lagerungselementes kraftseitig steuerbar sind.

In einer weiteren vorteilhaften Ausbildungsform ist am Greifer mindestens ein Mitnehmerelement zum Verschieben des Werkzeuges vorgesehen, wobei das Mitnehmerelement, insbesondere an dem Andockelement ausgebildet ist und eine sphärisch bzw. konvex gekrümmte Oberfläche aufweist. Der Greifer kann an einem Manipulator oder einem Roboterarm lösbar befestigt sein. Der Manipulator kann zwischendurch wahlweise mit dem erfindungsgemäßen Greifer oder mit anderen Einrichtungen bestückt werden um andere Bearbeitungsaufgaben durchzuführen.

Die Werkzeuge können insbesondere Spannelemente und/oder Elemente zur Positionierung und/oder Lagefixierung von Bauteilen insbesondere Karosserieteilen und/oder Sensor- oder Messelemente sein.

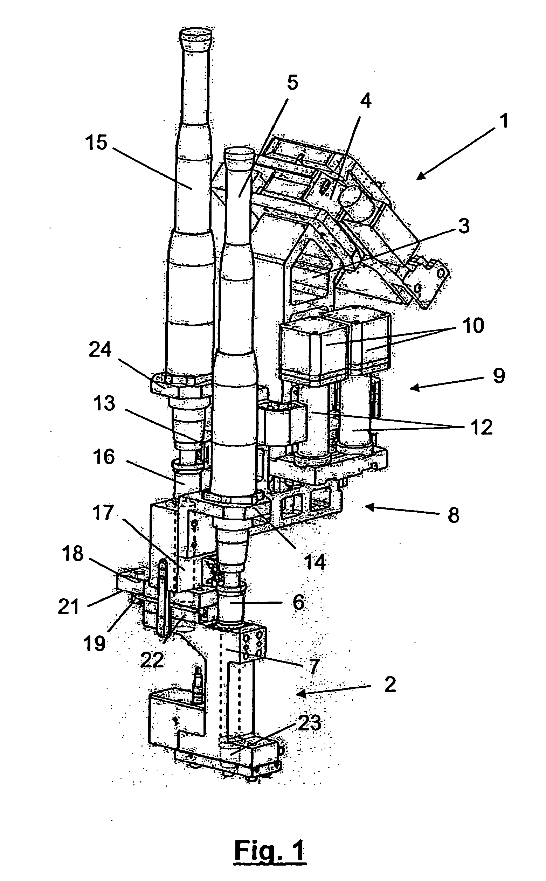

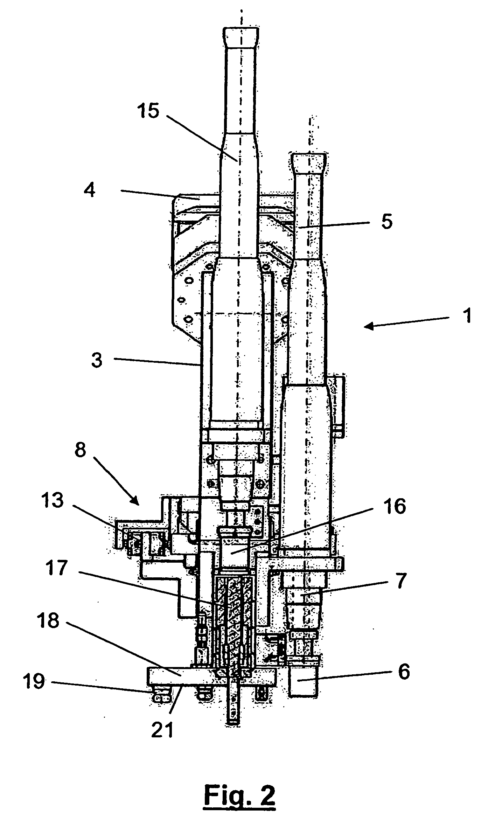

Mit der erfindungsgemäßen Lösung wird ein sicherer automatischer Wechsel von Werkzeugen gewährleistet. Durch die Verwendung von zwei mit Gewindespindeln bestückten Schraubern weist die Einrichtung einen einfachen und kostengünstigen Aufbau auf. Die Erfindung wird anhand der beigefügten Fig. 1 bis 3 beispielsweise näher erläutert.

Es zeigen
- Fig. 1: eine dreidimensionale Ansicht des Greifers 1 von vorn,
- Fig. 2: eine Vorderansicht des Greifers 1 und
- Fig. 3: eine Seitenansicht des Greifers 1.

In den Figuren ist ein erfindungsgemäßer Greifer dargestellt, der zum Wechseln und/oder Lageverandern, insbesondere zur Positionierung und Befestigung von Werkzeugen 2 in Form eines Spannelementes dient, wobei das Spannelement z. B. auf einer nicht dargestellten Montagefläche einer Vorrichtung zur Aufnahme eines nicht dargestellten Bauteiles bzw. Karosserieteiles dienen soll.

An einem Greifer 1, der einen Greiferrahmen 3 aufweist, ist ein erster Schrauber 5 befestigt, der einen ersten gefederten Schraubereinsatz 6 besitzt und eine erste Gewindespindel 7 betätigt. Mit der ersten Gewindespindel 7 soll das Werkzeug 2 auf der Montagefläche befestigt werden. Der Greifer 1 weist weiterhin einen zweiten Schrauber 15 mit einem zweiten gefederten Schraubereinsatz 16 auf, der eine zweite Gewindespindel 17 betätigt, die durch die Öffnung eines Andockelementes 18 reicht. An der Unterseite des Andockelementes 18 ist die Anlagefläche 21 für die Verbindung mit dem Werkzeug 2 angeordnet. Zur Befestigung des Werkzeuges 2 mit dem Andockelement 18 greift die zweite Gewindespindel 17, angetrieben durch den zweiten Schrauber 15 in eine Gewindebohrung 22 des Werkzeuges 2 ein.

Zum Befestigen des Werkzeuges 2 auf der Montagefläche wird mit der ersten Gewindespindel 7, die gemäß Fig. 1 in bzw. durch das Werkzeug 2 ragt, ein in dem Werkzeug 2 angeordnetes Befestigungselement 23, vorzugsweise eine Schraube in eine in der Montagefläche angeordnete, nicht dargestellte Gewindebohrung eingeschraubt, wobei das Werkzeug beim Einschrauben des Befestigungselementes 23 auf der Montagefläche lösbar befestigt wird. Danach kann mittels des zweiten Schraubers 15 die zweite Gewindespindel 17 aus der Gewindebohrung im Werkzeug 2 herausgeschraubt und anschließend der Greifer 1 entfernt werden.

Um einen Toleranzausgleich zu gewährleisten, wird der erste Schrauber 5 von einem Lagerungselement 8 aufgenommen, das am Greifer 1 in einer zur Längsachse des ersten Schraubers 5 rechtwinkligen oder im Wesentlichen rechtwinkligen Ebene schwimmend gelagert ist.

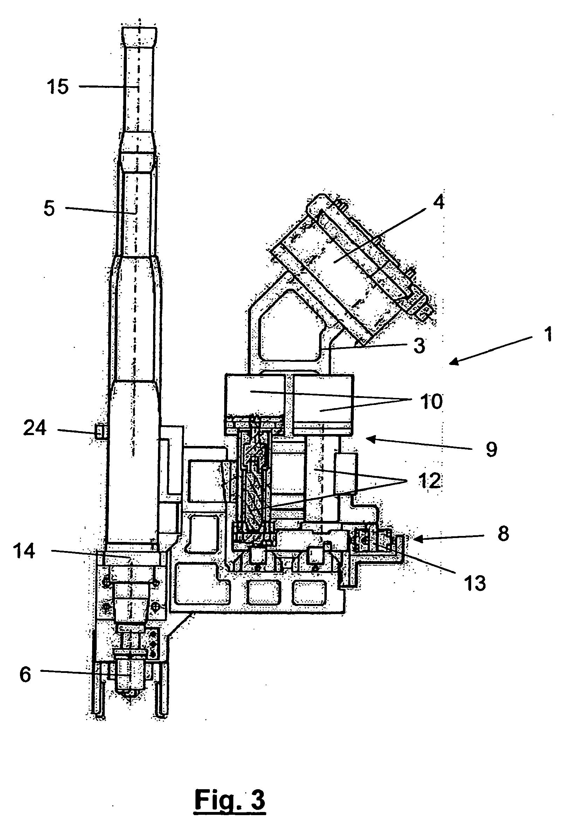

Aus Fig. 3 ist besonders ersichtlich, dass das Lagerungselement 8 mittels einer mechanischen Verriegelungseinheit 9 ver- und entriegelbar ist. Das Verriegelungselement 9 weist dazu zwei in Zylindern 12 nebeneinander angeordnete Bolzen 11 auf, die zum Verriegeln des Lagerelements 8 in korrespondierende Ausnehmungen des Lagerungselementes 8 eingreifen und zum Entriegeln aus diesen Ausnehmungen entfernt werden können. Die Verriegelungseinheit 9 weist zur Verstellung der Bolzen 12 entsprechende Antriebe 10 auf. Zur Dämpfung ist das Lagerungselement 8 mit Federn 13 ausgestattet, deren Federkraft bzw. Dämpfung bevorzugt einstellbar bzw. veränderbar ist.

An dem Andockelement 18 ist insbesondere zum Verschieben des Werkzeuges 2 auf der Montagefläche ein Mitnehmerelement 19 vorgesehen, das bevorzugt eine sphärische bzw. gekrümmte Oberfläche aufweist. Der Greifer 1 wird mittels des Flansches 4 an einem Manipulator oder Roboterarm befestigt. Der erste Schrauber 5 wird über am Greiferarmen 3 angeordnete Befestigungselemente 14 und der zweiter Schrauber 15 über ebenfalls am Greiferarm 3 angeordnete Befestigungselemente 24 und ein Führungselement 20 gehalten. Zur Befestigung des Werkzeuges 2 auf der Montagefläche sind vorzugsweise als Schrauben ausgebildete Befestigungselemente 23 im Werkzeug 2 beweglich angeordnet, die beim Transport des Werkzeuges 2 mit dem erfindungsgemäßen Greifer 1 in dem Werkzeug 2 verbleiben.

Der erfindungsgemäße Greifer 1 wird bevorzugt zum Wechseln oder zur Veränderung der Lage von Werkzeugen 2 in Framingstationen eingesetzt.

### Bezugszeichenliste

| | |
|---|---|
| 1 | Greifer |
| 2 | Werkzeug |
| 3 | Greiferrahmen |
| 4 | Flansch (an 3 zur Befestigung an einem Manipulator) |
| 5 | erster Schrauber |
| 6 | Schraubereinsatz (gefedert, zwischen 5 und 7) |
| 7 | Gewindespindel (an 5, 6 zur Befestigung von 2 auf einer Montagefläche) |
| 8 | Lagerungselement (an 3, für 5) |
| 9 | Verriegelungseinheit |
| 10 | Antrieb (für 9) |
| 11 | Bolzen |
| 12 | Zylinder |
| 13 | Federn |
| 14 | Befestigungselement (an 3, für 5) |
| 15 | zweiter Schrauber |
| 16 | Schraubereinsatz (gefedert, zwischen 15 und 17) |
| 17 | Gewindespindel |
| 18 | Andockelement |
| 19 | Mitnehmerelement (an 18) |
| 20 | Führungselement (an 14, für 17) |
| 21 | Anlagefläche (von 18, an 2) |
| 22 | Gewindebohrung (in 2 für 17) |
| 23 | Befestigungselement (in 2) |
| 24 | Befestigungselement (für 15 an 3) |

## Patentansprüche

1. Greifer (1) zur Positionierung, Befestigung, Lageveränderung und/oder zum Wechseln von Werkzeugen (2) auf einer Montagefläche, der an einer Handhabungseinrichtung befestigbar ist und mindestens zwei an einem Greiferarm (3) befestigte Schrauber (5, 15) zur lösbaren Verbindung des Werkzeuges (2) einerseits mit dem Greiferarm (3) und andererseits mit einer Montagefläche besitzt, wobei die Schrauber (5, 15) jeweils eine Gewindespindel (7, 17) betätigen.

2. Greifer nach Anspruch 1, **dadurch gekennzeichnet, dass** an dem Greiferarm (3) ein erster Schrauber (5) mit einer ersten Gewindespindel (7) angeordnet ist, mit welcher das Werkzeug (2) lösbar auf einer Montagefläche befestigbar ist und das am Greiferarm (3) ein zweiter Schrauber (15) mit einer zweiten Gewindespindel (17) angeordnet ist, mit welcher das Werkzeug (2) am Greiferarm (3) lösbar befestigbar ist.

3. Greifer nach Anspruch 1 oder 2, **dadurch gekennzeichnet, dass** in dem Werkzeug (2) ein Befestigungselement (23) beweglich angeordnet ist, das mit der ersten Gewindespindel (7) in eine Gewindebohrung der Montagefläche einschraubbar ist.

4. Greifer nach einem der Ansprüche 1 bis 3, **dadurch gekennzeichnet, dass** zur lösbaren Verbindung des Werkzeuges (2) mit dem Greiferarm (3) und/oder einem am Greiferarm (3) befestigten Andockelement (18) die zweite Gewindespindel (17) in eine Gewindebohrung des Werkzeuges (2) einschraubbar ist.

5. Greifer nach Anspruch 4, **dadurch gekennzeichnet, dass** die zweite Gewindespindel (17) zur Befestigung des Werkzeuges (2) an dem Andockelement (18) durch eine Bohrung oder Öffnung im Andockelement (18) geführt wird.

6. Greifer nach einem der Ansprüche 1 bis 5, **dadurch gekennzeichnet, dass** die erste Gewindespindel (7) in einer zu ihrer Längsachse rechtwinkligen Ebene in einem Lagerungselement (8) verschiebbar und/oder schwimmend gelagert ist.

7. Greifer nach Anspruch 6, **dadurch gekennzeichnet, dass** das Lagerungselement (8) mechanisch verriegelbar und entriegelbar ist.

8. Greifer nach Anspruch 6 oder 7, **dadurch gekennzeichnet, dass** das Lagerungselement (8) mit Federn (13) versehene Anschläge aufweist.

9. Greifer nach Anspruch 8, **dadurch gekennzeichnet, dass** die mit Federn (13) ausgebildeten Anschläge kraftseitig steuerbar sind.

10. Greifer nach einem der Ansprüche 1 bis 9, **dadurch gekennzeichnet, dass** der Greifer (1) mindestens ein Mitnehmerelement (19) zur Bewegung des Werkzeuges (2) auf der Montagefläche aufweist.

11. Greifer nach Anspruch 10, **dadurch gekennzeichnet, dass** das Mitnehmerelement (19) an dem Andockelement (18) angeordnet ist.

12. Greifer nach Anspruch 10 oder 11, **dadurch gekennzeichnet, dass** das Mitnehmerelement 19 eine sphärisch und/oder konvex gekrümmte Oberfläche aufweist.

13. Greifer nach einem der Ansprüche 1 bis 12, **dadurch gekennzeichnet, dass** der Greifer (1) an einem Manipulator oder Roboterarm lösbar befestigbar ist.

14. Greifer nach einem der Ansprüche 1 bis 13, **dadurch gekennzeichnet, dass** die Werkzeuge (2) als Spannelemente und/oder als Elemente zur Positionierung und/oder Lagefixierung von Bauteilen insbesondere Karosserieteilen und/oder als Sensor- oder Messelemente ausgebildet sind.

## Claims

1. Gripper (1) for positioning, attaching, shifting and/or changing tools (2) on a mounting surface, which can be attached to a handling device and has at least two screwing devices (5, 15) attached to a gripper arm (3) for releasable connection of the tool (2) on the one hand to the gripper arm (3) and on the other hand to a mounting surface, wherein the screwing devices (5, 15) each actuate a threaded shaft (7, 17).

2. Gripper as claimed in claim 1, **characterised in that** on the gripper arm (3) is disposed a first screwing device (5) with a first threaded shaft (7) with which the tool (2) can be releasably attached to a mounting surface and that on the gripper arm (3) is disposed a second screwing device (15) with a second threaded shaft (17) with which the tool (2) can be releasably attached to the gripper arm (3).

3. Gripper as claimed in claim 1 or 2, **characterised in that** in the tool (2) an attachment element (23) is moveably disposed and can be screwed with the first threaded shaft (7) into a threaded bore in the mounting surface.

4. Gripper as claimed in any one of claims 1 to 3, **characterised in that** the second threaded shaft (17) can be screwed into a threaded bore in the tool (2) in order to releasably connect the tool (2) to the gripper arm (3) and/or to a docking element (18) attached to the gripper arm (3).

5. Gripper as claimed in claim 4, **characterised in that** the second threaded shaft (17) is guided through a bore or opening in the docking element (18) in order to attach the tool (2) to the docking element (18).

6. Gripper as claimed in any one of claims 1 to 5, **characterised in that** the first threaded shaft (7) is mounted in a displaceable and/or floating manner in a plane, at right angles to its longitudinal axis, in a bearing element (8).

7. Gripper as claimed in claim 6, **characterised in that** the bearing element (8) can be locked and unlocked mechanically.

8. Gripper as claimed in claim 6 or 7, **characterised in that** the bearing element (8) has stops provided with springs (13).

9. Gripper as claimed in claim 8, **characterised in that** the stops formed with springs (13) can be controlled on the force side.

10. Gripper as claimed in any one of claims 1 to 9, **characterised in that** the gripper (1) has at least one entrainment element (19) for movement of the tool (2) on the mounting surface.

11. Gripper as claimed in claim 10, **characterised in that** the entrainment element (19) is disposed on the docking element (18).

12. Gripper as claimed in claim 10 or 11, **characterised in that** the entrainment element 19 has a spherically and/or convexly curved surface.

13. Gripper as claimed in any one of claims 1 to 12, **characterised in that** the gripper (1) can be releasably attached to a manipulator or robot arm.

14. Gripper as claimed in any one of claims 1 to 13, **characterised in that** the tools (2) are formed as clamping elements and/or as elements for positioning and/or positionally fixing components in particular bodywork parts and/or as sensor or measuring elements.

## Revendications

1. Dispositif de préhension pour le positionnement, la fixation, la modification de la position et / ou pour le changement d'outils (2) sur une surface de montage, lequel peut être fixé à un système de maniement et est doté d'au moins deux tournevis (5, 15), fixés à un bras de préhension (3), pour la fixation amovible de l'outil (2) au bras de préhension (3), d'une part, et à une surface de montage , d'autre part, sachant que les tournevis (5, 15) actionnent chacun une broche filetée (7, 17).

2. Dispositif de préhension selon la revendication 1, **caractérisé en ce que**, sur le bras de préhension (3), est agencé un premier tournevis (5) avec une première broche filetée (7), au moyen de laquelle l'outil (2) peut être fixé de manière amovible sur une surface de montage, et qu'au bras de préhension (3) est agencé une deuxième tournevis (15) avec une deuxième broche filetée (17), au moyen de laquelle l'outil (2) peut être fixé au bras de préhension (3) de manière amovible.

3. Dispositif de préhension selon revendication 1 ou 2, **caractérisé en ce que**, dans l'outil (2), est agencé, mobile, un élément de fixation (23), qui peut être vissé, avec la première broche filetée (7), dans un trou fileté de la surface de montage.

4. Dispositif de préhension selon l'une des revendications 1 à 3, **caractérisé en ce que**, pour la liaison amovible de l'outil (2) au bras de préhension (3) et / ou à un élément d'ancrage, la deuxième broche filetée (17) peut être vissée dans un trou fileté.

5. Dispositif de préhension selon la revendication 4, **caractérisé en ce que**, pour la fixation de l'outil (2) sur l'élément d'ancrage (18), la deuxième broche filetée (17) est conduite à travers un trou fileté de l'outil (2).

6. Dispositif de préhension selon l'une des revendications 1 à 5, **caractérisé en ce que** la première broche filetée (7) est montée, déplaçable et / ou flottante, dans l'élément de support (8), dans un plan à angle droit par rapport à son axe longitudinal.

7. Dispositif de préhension selon la revendication 6, **caractérisé en ce que** l'élément de support (8) peut être verrouillé et déverrouillé mécaniquement.

8. Dispositif de préhension selon revendication 6 ou 7, **caractérisé en ce que** l'élément support (8) est doté de butées pourvues de ressorts (13).

9. Dispositif de préhension selon la revendication 8, **caractérisé en ce que** les butées équipées de ressorts (13) peuvent être commandées du côté de force.

10. Dispositif de préhension selon l'une des revendications 1 à 9, **caractérisé en ce que** le dispositif de préhension (1) est doté d'au moins un élément entraîneur (19) pour le déplacement de l'outil (2) sur la surface de montage.

11. Dispositif de préhension selon la revendication 10, **caractérisé en ce que** l'élément entraîneur (19) est agencé sur l'élément d'ancrage (18).

12. Dispositif de préhension selon revendication 10 ou 11, **caractérisé en ce que** l'élément entraîneur (19) est doté d'une surface sphérique et / ou convexe.

13. Dispositif de préhension selon l'une des revendications 1 à 12, **caractérisé en ce que** le dispositif de préhension (1) peut être fixé de manière amovible sur un manipulateur ou sur un bras de robot.

14. Dispositif de préhension selon l'une des revendications 1 à 13, **caractérisé en ce que** les outils (2) sont réalisés sous la forme d'éléments de serrage et / ou d'éléments de positionnement et / ou de fixation positionnée de composants, en particulier de pièces de carrosseries et / ou sous la forme d'éléments de détection ou de mesure.
